# FASCICULE DE BREVET EUROPEEN

(11) **EP 4 313 707 B1**
(45) Date de publication et mention de la délivrance du brevet: **13.05.2026**
(21) Numéro de dépôt: 22709349.9
(22) Date de dépôt: 01.02.2022
(51) Int. Cl.: B60W 30/14, B60W 10/184, B60W 10/06, B60W 50/038, B60W 30/194

(54) **PROCEDE DE PILOTAGE D'UN REGULATEUR DE VITESSE ADAPTATIF**
VERFAHREN ZUR STEUERUNG EINES ADAPTIVEN GESCHWINDIGKEITSREGLERS
METHOD FOR CONTROLLING AN ADAPTIVE CRUISE CONTROL

(30) Priorité: 29.03.2021 FR 2103150
(43) Date de publication de la demande: 07.02.2024
(73) Titulaire: Stellantis Auto SAS, 78300 Poissy (FR)
(72) Inventeur: IDLIMAM, Younes, 78450 VILLEPREUX (FR); MANCEUR, Malik, 95870 BEZONS (FR); HECKETSWEILER, Thierry, 90800 BAVILLIERS (FR)
(74) Mandataire: PSIP
(86) Numéro de dépôt international: PCT/FR2022/050175
(87) Numéro de publication internationale: WO 2022/207986

(56) Documents cités:
- EP-A1- 1 964 746
- WO-A1-2007/006659
- FR-A1- 3 071 461
- US-A1- 2017 344 023
- US-B2- 7 133 760

## Description

### Domaine technique de l'invention

La présente invention concerne un procédé de pilotage d'un régulateur de vitesse adaptatif d'un véhicule automobile ainsi qu'un véhicule automobile comprenant une unité électronique de contrôle embarquée pour la mise en œuvre d'un tel procédé de pilotage du régulateur de vitesse adaptatif.

### Art antérieur

Il est connu de l'état de la technique d'équiper un véhicule automobile d'un régulateur de vitesse adaptatif qui ajuste automatiquement la vitesse du véhicule pour maintenir une distance de suivi sûre. Un tel régulateur utilise généralement un radar, disposé à l'avant du véhicule, pour détecter la vitesse et la distance de tout véhicule en avant le précédant. Un tel régulateur de vitesse adaptatif est connu, par exemple, du document EP 1971511 B1.

En outre l'état de la technique est connu des documents WO2007006659A1 et FR3071461A1.

Comme une distance de sécurité entre les deux véhicules se suivant est prédéterminée par le régulateur, si le véhicule en avant ralentit, le régulateur du véhicule automobile en arrière envoie un signal au moteur et/ou au système de freinage du véhicule pour qu'il décélère. Ensuite, lorsque la route est dégagée, le régulateur de vitesse adaptatif accélère de nouveau le véhicule à une vitesse prédéfinie.

Dans une autre situation un régulateur de vitesse adaptatif peut freiner le véhicule automobile quand celui-ci descend une pente, donc aussi hors de cas de présence de cible suivi.

Une unité électronique de contrôle embarquée dans le véhicule automobile effectue le pilotage du régulateur de vitesse adaptatif. L'unité électronique de contrôle délivre une consigne de couple au moteur, via une unité de contrôle moteur intégrée dans le groupe motopropulseur.

Actuellement, le régulateur de vitesse adaptatif est souvent couplé au système de freinage automatique d'urgence qui permet l'évitement d'obstacle et le freinage d'urgence pour éviter les accidents, notamment en ville. Le régulateur de vitesse adaptatif peut aussi être relié au système de contrôle électronique de la stabilité du véhicule automobile pouvant aussi être intégré dans l'unité électronique de contrôle.

Il s'ensuit que dans certaines situations de roulage, notamment à basse vitesse, par exemple mais non limitativement une vitesse inférieure à 15km/h, une consigne de couple au moteur et une consigne de freinage peuvent être émises simultanément.

Or, si un système de freinage est utilisé de manière excessive et ceci sur des durées prolongées, le système de freinage peut être usé plus rapidement et soumis à un échauffement qui est désavantageux pour son bon fonctionnement, des plaquettes de frein soumises à une chaleur excessive pouvant, par exemple, perdre de leur coefficient de friction.

Par conséquent, le problème à la base de l'invention est, dans un véhicule automobile équipé d'un régulateur de vitesse adaptatif, de ne plus solliciter aussi intensivement le système freinage du véhicule dans des conditions de ralentissement exigé du véhicule automobile.

### Résumé de l'invention

A cet effet, la présente invention concerne un procédé de pilotage d'un régulateur de vitesse adaptatif d'un véhicule automobile à moteur équipé d'un système de freinage, dans lequel il est délivré une consigne de couple au moteur et une consigne de freinage au système de freinage limitant une trainée du véhicule, des suivis dans le temps de la consigne de couple au moteur et/ou d'un couple à la roue effectivement réalisé dans le temps étant opérés, caractérisé en ce qu'il est déterminé au moins un seuil maximal de consigne de couple au moteur et/ou de couple moteur à la roue effectivement réalisé avec, dès qu'une consigne du couple au moteur et une consigne de freinage sont lancées en parallèle et que ledit au moins un seuil maximal est dépassé, il est initié un comptage de temps et si une durée maximale prédéterminée de lancement en parallèle des consignes avec dépassement dudit au moins un seuil maximal est atteinte lors du comptage de temps, il est procédé en un fonctionnement en mode dégradé de pilotage du régulateur de vitesse adaptatif avec annulation de la consigne de couple au moteur, la durée maximale prédéterminée de lancement en parallèle des consignes et de dépassement dudit au moins un seuil maximal étant préalablement expérimentalement calculée en fonction d'un échauffement maximal acceptable du système de freinage atteint pendant la durée de comptage de temps.

Une telle surveillance des consignes de couple moteur et de freinage permet d'éviter l'échauffement des parties du système de freinage liées à une roue du véhicule et subissant le plus fort échauffement, par exemple les disques de frein.

L'apparition de cet échauffement représentait le plus grand défaut d'un régulateur de vitesse adaptatif et pouvait menacer la sécurité du véhicule. Il est ainsi fourni une plage fonctionnelle du pilotage du régulateur de vitesse adaptatif, reconnue comme néfaste pour le véhicule automobile, où l'annulation de la consigne de couple moteur est effectuée et où le régulateur de vitesse adaptatif voit son fonctionnement limité pour cause d'insécurité de la conduite du véhicule automobile sans cette limitation.

Le couple moteur à la roue peut être différent de la consigne de couple au moteur et son suivi permet d'affiner le pilotage du régulateur de vitesse adaptatif. Le seul suivi de la consigne de couple au moteur pourrait donc donner une indication erronée préjudiciable à un bon pilotage du régulateur de vitesse adaptatif.

Quand soit le couple moteur à la roue et/ou la consigne de couple au moteur sont trop élevés par rapport à la vitesse de rampage, il convient de procéder le plus rapidement possible à un fonctionnement en mode dégradé du régulateur de vitesse adaptatif avec annulation de la consigne de couple au moteur.

Ainsi, la mise en œuvre du procédé permet d'éviter l'échauffement et l'usure rapide des freins, par exemple des disques de frein et dans des cas extrêmes les risques d'incendies. Un inconfort pour le conducteur pouvait aussi être provoqué par un trop fort échauffement du système de freinage. Le procédé de pilotage effectue une limitation de la fonction de régulateur de vitesse adaptatif, quand il est constaté que cette fonction de régulateur abuse de l'utilisation de consigne de couple moteur associée à une consigne de freinage et sollicite trop le système de freinage.

Avantageusement, le procédé est mis en œuvre pour des vitesses du véhicule automobile inférieures à 15 km/h. La mise en œuvre du procédé de pilotage présente en effet le plus d'intérêt pour des vitesses dites de rampage inférieures à 15km/h.

Avantageusement, la durée maximale prédéterminée de lancement en parallèle des consignes et de dépassement dudit au moins un seuil maximal est comprise entre 25 et 35 secondes, avantageusement 30 secondes.

Cette durée maximale a été fixée expérimentalement comme induisant un échauffement inconfortable ou provoquant une usure immodérée du système de freinage et particulièrement de ses éléments en contact avec une roue du véhicule automobile.

Avantageusement, l'échauffement maximal acceptable est mesurée selon une puissance dissipée par le système de freinage en tenant compte de la vitesse du véhicule automobile, d'un rapport de vitesse mis en œuvre dans le véhicule automobile et de la consigne de couple au moteur.

Avantageusement, l'échauffement maximal acceptable correspond à une puissance dissipée de 7.200 Watts par roue du véhicule automobile avec un intervalle de +/- 20% autour de cette valeur pour une vitesse du véhicule automobile de 15 km/h, un rapport de vitesse en première et une consigne de couple au moteur de 600 Newton-mètre.

Avantageusement, ledit au moins un seuil maximal est égal à 840 Newton-mètre avec un intervalle de +/- 30% autour de cette valeur.

L'invention concerne aussi un véhicule automobile comprenant un groupe motopropulseur, un système de freinage, une unité électronique de contrôle embarquée et un régulateur de vitesse adaptatif, l'unité électronique de contrôle comprenant des moyens d'établissement d'une consigne de couple au moteur à destination du groupe motopropulseur et d'une consigne de freinage à destination du système de freinage, caractérisé en ce que l'unité électronique de contrôle met en œuvre un procédé de pilotage du régulateur de vitesse adaptatif tel que précédemment décrit, l'unité électronique de contrôle comprenant un compteur de temps initié dès qu'une consigne du couple au moteur et une consigne de freinage sont lancées en parallèle et que ledit au moins un seuil maximal de consigne de couple au moteur et/ou de couple moteur à la roue effectivement réalisé est dépassé, un moyen de mémorisation d'une durée maximale prédéterminée de lancement en parallèle des consignes et dudit au moins un seuil maximal et un moyen d'annulation de la consigne de couple au moteur quand un moyen de comparaison détermine qu'un comptage de temps est supérieur à la durée maximale prédéterminée.

La mise en œuvre du procédé de pilotage selon l'invention n'implique que des changements logiciels dans des éléments comme l'unité électronique de contrôle déjà présents dans le véhicule automobile. L'ajout d'un capteur de température est ainsi évité et une économie de coût est réalisée.

Avantageusement, l'unité électronique de contrôle intègre un système de contrôle électronique de la stabilité du véhicule, le système de contrôle de stabilité comportant une unité hydraulique assurant une transmission de la consigne de freinage au système de freinage du véhicule automobile.

Avantageusement, le groupe motopropulseur comprend une unité de contrôle moteur comportant des moyens de suivi du couple moteur à la roue du véhicule automobile effectivement réalisé et communicant avec l'unité électronique de contrôle.

### Brève description des figures

D'autres caractéristiques, buts et avantages de la présente invention apparaîtront à la lecture de la description détaillée qui va suivre et au regard du dessin annexé donné à titre d'exemple non limitatif et sur lequel :

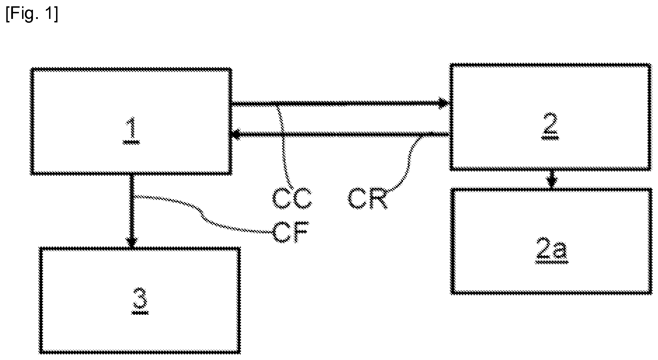

[Fig. 1] - la figure 1 est une vue schématique d'une unité électronique de contrôle envoyant des consignes de couple et de freinage respectivement à un groupe motopropulseur et à un système de freinage d'un véhicule automobile, l'unité électronique de contrôle pouvant mettre en œuvre le procédé de pilotage d'un régulateur adaptatif de vitesse selon la présente invention.

### Description détaillée de l'invention

En se référant à la figure 1, la présente invention concerne un procédé de pilotage d'un régulateur de vitesse adaptatif d'un véhicule automobile à moteur équipé d'un système de freinage 3. Le système de freinage 3 comprend des éléments de freinage, comme des disques ou des tambours, associés respectivement à une roue du véhicule automobile.

A cette figure 1, il est montré une unité électronique 1 de contrôle, un groupe motopropulseur 2 associé à un moteur 2a et un système de freinage 3 du véhicule automobile, sans qu'il soit rentré dans les détails de ces éléments. Dans le cadre de la présente invention, le véhicule automobile est équipé d'un régulateur adaptatif de vitesse qui est alors piloté par l'unité électronique 1 de contrôle.

De manière connue, l'unité électronique 1 de contrôle peut délivrer une consigne de couple CC au moteur et une consigne de freinage CF au système de freinage 3. En retour, le groupe motopropulseur 2, par une unité de contrôle moteur, peut envoyer vers l'unité électronique 1 de contrôle une valeur de couple à la roue CR effectivement réalisé par le moteur.

Ces deux consignes de couple CC et de freinage CF peuvent être délivrées simultanément par l'unité électronique 1 de contrôle dans le cadre du pilotage d'un régulateur adaptatif de vitesse afin de limiter une trainée du véhicule.

Ceci peut être particulièrement le cas à basse vitesse du véhicule automobile, par exemple à des vitesses inférieures à 15 km/h, ce qui est une application préférentielle mais non limitative du procédé de pilotage selon la présente invention.

En effet, l'application simultanée d'un freinage par l'unité électronique 1 de contrôle et d'un couple à la roue positif par le moteur est nécessaire pour assurer une performance acceptable du régulateur de vitesse adaptatif dans des conditions de faible vitesse.

Il est aussi opéré des suivis dans le temps de la consigne de couple CC au moteur et/ou d'un couple à la roue CR effectivement réalisé dans le temps.

Selon l'invention, afin qu'il n'y ait pas une surchauffe dans le système de freinage 3 et notamment pour ses éléments associés aux roues agissant en friction sur leur roue, il est déterminé au moins un seuil maximal de consigne de couple CC au moteur et/ou de couple moteur à la roue CR effectivement réalisé.

Dès qu'une consigne du couple au moteur CC et une consigne de freinage CF sont lancées en parallèle et que ledit au moins un seuil maximal est dépassé, il est initié un comptage de temps.

Si une durée maximale prédéterminée de lancement en parallèle des consignes avec dépassement dudit au moins un seuil maximal est atteinte lors du comptage de temps, il est procédé en un fonctionnement en mode dégradé de pilotage du régulateur de vitesse adaptatif avec annulation de la consigne de couple CC au moteur.

Il a été expérimentalement déterminé que la durée maximale prédéterminée de lancement en parallèle des consignes CC, CF et de dépassement dudit au moins un seuil maximal peut être comprise entre 25 et 35 secondes, avantageusement 30 secondes, ces valeurs étant calibrables.

Cette durée maximale de lancement en parallèle des consignes CC, CF et de dépassement dudit au moins un seuil maximal peut correspondre à un échauffement maximal obtenu à une partie du système de freinage 3 associée à une roue, cet échauffement maximal étant avantageusement mesuré en Watts et étant obtenu pendant la durée de comptage de temps en étant considéré comme la limite supérieure acceptable d'échauffement du système de freinage 3.

L'échauffement maximal acceptable peut être mesuré selon une puissance dissipée par le système de freinage 3, avantageusement pour une partie du système de freinage 3 directement associée à une roue du véhicule automobile en tenant compte de la vitesse du véhicule automobile, d'un rapport de vitesse mis en œuvre dans le véhicule automobile et de la consigne de couple CC au moteur.

Pour des vitesses de rampage faibles inférieures à 15km/h illustrant une application préférentielle mais non limitative du procédé de pilotage selon la présente invention, il est possible d'établir des graphiques donnant une puissance dissipée à la roue en Watts par une partie du système de freinage 3 associée à la roue, ceci pour des régimes moteur et diverses vitesses du véhicule basses allant de 1 Km/h à 15km/h et pour un rapport de vitesse de première ou de seconde qui sont les rapports de vitesse adaptés pour ces vitesses de rampage inférieures à 15km/h.

Il a été validé expérimentalement un échauffement maximal de 7.200 Watts qui est la limite supérieure d'échauffement non dommageable pour le système de freinage 3, ceci pour un couple moteur de 600 Newton-mètre et une vitesse de 15 km/h.

L'échauffement maximal acceptable est variable selon le type de système de freinage 3. Cet échauffement maximal peut donc correspondre à une puissance dissipée de 7.200 Watts par roue du véhicule automobile avec un intervalle de +/- 20% autour de cette valeur, ceci pour une vitesse du véhicule automobile de 15 km/h, un rapport de vitesse en première ou en seconde et une consigne de couple CC au moteur de 600 Newton-mètre.

Ledit au moins un seuil maximal, par exemple un des deux seuils maximaux ou même les deux seuils maximaux pour la consigne de couple CC au moteur et le couple moteur à la roue CR peut être égal à 840 Newton-mètre avec un intervalle de +/- 30% autour de cette valeur.

L'invention concerne aussi un véhicule automobile comprenant un groupe motopropulseur 2, un système de freinage 3, une unité électronique 1 de contrôle embarquée et un régulateur de vitesse adaptatif.

De manière connue, l'unité électronique 1 de contrôle comprend des moyens d'établissement d'une consigne de couple CC au moteur à destination du groupe motopropulseur 2 et d'une consigne de freinage CF à destination du système de freinage 3.

Dans le cadre de la présente invention, comme l'unité électronique 1 de contrôle met en œuvre un procédé de pilotage du régulateur de vitesse adaptatif tel que précédemment décrit, l'unité électronique 1 de contrôle comprend un compteur de temps initié dès qu'une consigne du couple CC au moteur et une consigne de freinage CF sont lancées en parallèle et que ledit au moins un seuil maximal de consigne de couple CC au moteur et/ou de couple moteur à la roue CR effectivement réalisé est dépassé.

L'unité électronique 1 de contrôle comprend aussi un moyen de mémorisation d'une durée maximale prédéterminée de lancement en parallèle des consignes CC, CF et dudit au moins un seuil maximal.

L'unité électronique 1 de contrôle comprend enfin un moyen d'annulation de la consigne de couple CC au moteur quand un moyen de comparaison détermine qu'un comptage de temps est supérieur à la durée maximale prédéterminée.

L'unité électronique 1 de contrôle peut intégrer un système de contrôle électronique de la stabilité du véhicule, le système de contrôle de stabilité pouvant comporter une unité hydraulique assurant une transmission de la consigne de freinage CF au système de freinage 3 du véhicule automobile.

Dans le cadre de la présente invention, dans le véhicule automobile, une unité de contrôle moteur du groupe motopropulseur 2 peut comprendre des moyens de suivi du couple moteur à la roue CR du véhicule automobile effectivement réalisé et peut envoyer ces valeurs à l'unité électronique 1 de contrôle qui les prend en compte en plus du suivi de la consigne de couple CC au moteur par l'unité électronique 1 de contrôle.

L'unité électronique 1 de contrôle peut alors comprendre des moyens de prédétermination d'au moins un seuil maximal ou de deux seuils maximaux respectivement pour la consigne de couple CC au moteur et pour le couple moteur à la roue CR effectivement réalisé.

L'unité électronique 1 de contrôle peut utiliser le moyen d'annulation de la consigne de couple CC au moteur précédemment cité en association avec le comptage de temps quand le moyen de comparaison détermine que le compteur indique un comptage de temps supérieur à la durée maximale prédéterminée avec maintien d'un dépassement d'un des seuils maximaux ou des deux seuils maximaux pendant cette durée.

Dans le cadre de la présente invention le groupe motopropulseur 2 peut être thermique, électrique ou hybride.

L'invention n'est nullement limitée aux modes de réalisation décrits et illustrés qui n'ont été donnés qu'à titre d'exemples.

## Revendications

1. Procédé de pilotage d'un régulateur de vitesse adaptatif d'un véhicule automobile à moteur équipé d'un système de freinage (3), dans lequel il est délivré une consigne de couple (CC) au moteur et une consigne de freinage (CF) au système de freinage (3) limitant une trainée du véhicule, des suivis dans le temps de la consigne de couple (CC) au moteur et/ou d'un couple à la roue (CR) effectivement réalisé dans le temps étant opérés, **caractérisé en ce qu'**il est déterminé au moins un seuil maximal de consigne de couple (CC) au moteur et/ou de couple moteur à la roue (CR) effectivement réalisé avec, dès qu'une consigne du couple au moteur (CC) et une consigne de freinage (CF) sont lancées en parallèle et que ledit au moins un seuil maximal est dépassé, il est initié un comptage de temps et si une durée maximale prédéterminée de lancement en parallèle des consignes avec dépassement dudit au moins un seuil maximal est atteinte lors du comptage de temps, il est procédé en un fonctionnement en mode dégradé de pilotage du régulateur de vitesse adaptatif avec annulation de la consigne de couple (CC) au moteur, la durée maximale prédéterminée de lancement en parallèle des consignes (CC, CF) et de dépassement dudit au moins un seuil maximal étant préalablement expérimentalement calculée en fonction d'un échauffement maximal acceptable du système de freinage (3) atteint pendant la durée de comptage de temps.

2. Procédé selon la revendication précédente, lequel est mis en œuvre pour des vitesses du véhicule automobile inférieures à 15 km/h.

3. Procédé selon la revendication précédente, dans lequel la durée maximale prédéterminée de lancement en parallèle des consignes (CC, CF) et de dépassement dudit au moins un seuil maximal est comprise entre 25 et 35 secondes.

4. Procédé selon l'une quelconque des revendications précédentes, dans lequel l'échauffement maximal acceptable est mesurée selon une puissance dissipée par le système de freinage (3) en tenant compte de la vitesse du véhicule automobile, d'un rapport de vitesse mis en œuvre dans le véhicule automobile et de la consigne de couple (CC) au moteur.

5. Procédé selon la revendication précédente, dans lequel l'échauffement maximal acceptable correspond à une puissance dissipée de 7.200 Watts par roue du véhicule automobile avec un intervalle de +/- 20% autour de cette valeur pour une vitesse du véhicule automobile de 15 km/h, un rapport de vitesse en première et une consigne de couple (CC) au moteur de 600 Newton-mètre.

6. Procédé selon l'une quelconque des revendications précédentes, dans lequel ledit au moins un seuil maximal est égal à 840 Newton-mètre avec un intervalle de +/-30% autour de cette valeur.

7. Véhicule automobile comprenant un groupe motopropulseur (2), un système de freinage (3), une unité électronique (1) de contrôle embarquée et un régulateur de vitesse adaptatif, l'unité électronique (1) de contrôle comprenant des moyens d'établissement d'une consigne de couple (CC) au moteur à destination du groupe motopropulseur (2) et d'une consigne de freinage (CF) à destination du système de freinage (3), **caractérisé en ce que** l'unité électronique (1) de contrôle met en œuvre un procédé de pilotage du régulateur de vitesse adaptatif selon l'une quelconque des revendications précédentes, l'unité électronique (1) de contrôle comprenant un compteur de temps initié dès qu'une consigne du couple (CC) au moteur et une consigne de freinage (CF) sont lancées en parallèle et que ledit au moins un seuil maximal de consigne de couple (CC) au moteur et/ou de couple moteur à la roue (CR) effectivement réalisé est dépassé, un moyen de mémorisation d'une durée maximale prédéterminée de lancement en parallèle des consignes (CC, CF) et dudit au moins un seuil maximal et un moyen d'annulation de la consigne de couple (CC) au moteur quand un moyen de comparaison détermine qu'un comptage de temps est supérieur à la durée maximale prédéterminée.

8. Véhicule automobile selon la revendication précédente, dans lequel l'unité électronique (1) de contrôle intègre un système de contrôle électronique de la stabilité du véhicule, le système de contrôle de stabilité comportant une unité hydraulique assurant une transmission de la consigne de freinage (CF) au système de freinage (3) du véhicule automobile.

9. Véhicule automobile selon l'une quelconque des deux revendications précédentes, dans lequel le groupe motopropulseur (2) comprend une unité de contrôle moteur comportant des moyens de suivi du couple moteur à la roue (CR) du véhicule automobile effectivement réalisé et communicant avec l'unité électronique (1) de contrôle.

## Patentansprüche

1. Verfahren zum Steuern einer adaptiven Geschwindigkeitsregelung eines Kraftfahrzeugs mit Motor, das mit einem Bremssystem (3) ausgestattet ist, wobei ein Motordrehmomentsollwert (CC) an den Motor und ein Bremssollwert (CF) an das Bremssystem (3) ausgegeben werden, wodurch ein Widerstand des Fahrzeugs begrenzt wird, und wobei zeitliche Überwachungen des Motordrehmomentsollwerts (CC) und/oder eines tatsächlich an den Rädern erzeugten Drehmoments (CR) durchgeführt werden, **dadurch gekennzeichnet, dass** mindestens ein maximaler Schwellenwert des Motordrehmomentsollwerts (CC) und/oder des tatsächlich an den Rädern erzeugten Motordrehmoments (CR) bestimmt wird, wobei, sobald ein Motordrehmomentsollwert (CC) und ein Bremssollwert (CF) parallel gestartet werden und der mindestens eine maximale Schwellenwert überschritten wird, eine Zeitmessung eingeleitet wird und, wenn während der Zeitmessung eine vorbestimmte maximale Dauer des parallelen Startens der Sollwerte mit Überschreitung des mindestens einen maximalen Schwellenwerts erreicht wird, ein Betrieb im degradierten Modus der adaptiven Geschwindigkeitsregelung mit Aufhebung des Motordrehmomentsollwerts (CC) durchgeführt wird, wobei die vorbestimmte maximale Dauer des parallelen Startens der Sollwerte (CC, CF) und der Überschreitung des mindestens einen maximalen Schwellenwerts zuvor experimentell in Abhängigkeit von einer maximal zulässigen Erwärmung des Bremssystems (3) berechnet wird, die während der Dauer der Zeitmessung erreicht wird.

2. Verfahren nach dem vorhergehenden Anspruch, das für Fahrzeuggeschwindigkeiten unterhalb von 15 km/h umgesetzt wird.

3. Verfahren nach dem vorhergehenden Anspruch, bei dem die vorbestimmte maximale Dauer des parallelen Startens der Sollwerte (CC, CF) und der Überschreitung des mindestens einen maximalen Schwellenwerts zwischen 25 und 35 Sekunden liegt.

4. Verfahren nach einem der vorhergehenden Ansprüche, bei dem die maximal zulässige Erwärmung entsprechend einer vom Bremssystem (3) abgegebenen Leistung gemessen wird unter Berücksichtigung der Geschwindigkeit des Fahrzeugs, eines im Fahrzeug eingesetzten Übersetzungsverhältnisses und des Motordrehmomentsollwerts (CC).

5. Verfahren nach dem vorhergehenden Anspruch, bei dem die maximal zulässige Erwärmung einer abgegebenen Leistung von 7.200 Watt pro Rad des Fahrzeugs entspricht mit einem Intervall von ±20 % um diesen Wert bei einer Fahrzeuggeschwindigkeit von 15 km/h, einem ersten Gang und einem Motordrehmomentsollwert (CC) von 600 Newtonmeter.

6. Verfahren nach einem der vorhergehenden Ansprüche, bei dem der mindestens eine maximale Schwellenwert gleich 840 Newtonmeter ist mit einem Intervall von ±30 % um diesen Wert.

7. Kraftfahrzeug umfassend einen Antriebsstrang (2), ein Bremssystem (3), eine bordeigene elektronische Steuereinheit (1) und eine adaptive Geschwindigkeitsregelung, wobei die elektronische Steuereinheit (1) Mittel zum Erzeugen eines Motordrehmomentsollwerts (CC) für den Antriebsstrang (2) und eines Bremssollwerts (CF) für das Bremssystem (3) umfasst, **dadurch gekennzeichnet, dass** die elektronische Steuereinheit (1) ein Verfahren zum Steuern der adaptiven Geschwindigkeitsregelung nach einem der vorhergehenden Ansprüche ausführt, wobei die elektronische Steuereinheit (1) einen Zeitmesser umfasst, der eingeleitet wird, sobald ein Motordrehmomentsollwert (CC) und ein Bremssollwert (CF) parallel gestartet werden und der mindestens eine maximale Schwellenwert überschritten wird, Mittel zum Speichern einer vorbestimmten maximalen Dauer des parallelen Startens der Sollwerte (CC, CF) und des mindestens einen maximalen Schwellenwerts sowie Mittel zum Aufheben des Motordrehmomentsollwerts (CC), wenn Vergleichsmittel bestimmen, dass die Zeitmessung größer als die vorbestimmte maximale Dauer ist.

8. Kraftfahrzeug nach dem vorhergehenden Anspruch, bei dem die elektronische Steuereinheit (1) ein elektronisches Stabilitätskontrollsystem des Fahrzeugs integriert, wobei das Stabilitätskontrollsystem eine hydraulische Einheit umfasst, die eine Übertragung des Bremssollwerts (CF) an das Bremssystem (3) des Fahrzeugs gewährleistet.

9. Kraftfahrzeug nach einem der beiden vorhergehenden Ansprüche, bei dem der Antriebsstrang (2) eine Motorsteuereinheit umfasst, die Mittel zur Überwachung des tatsächlich erzeugten Motordrehmoments an den Rädern (CR) des Fahrzeugs umfasst und mit der elektronischen Steuereinheit (1) kommuniziert.

## Claims

1. Method for controlling an adaptive cruise control of a motor vehicle equipped with a braking system (3), in which an engine torque setpoint (CC) is delivered to the engine and a braking setpoint (CF) is delivered to the braking system (3) limiting vehicle drag, time monitoring of the engine torque setpoint (CC) and/or of a wheel torque (CR) actually produced over time being performed, **characterized in that** at least one maximum threshold of engine torque setpoint (CC) and/or engine torque at the wheel (CR) actually produced is determined, with, as soon as an engine torque setpoint (CC) and a braking setpoint (CF) are launched in parallel and said at least one maximum threshold is exceeded, a time counting being initiated and, if a predetermined maximum duration of parallel launching of the setpoints with exceeding of said at least one maximum threshold is reached during the time counting, a degraded mode of operation of the adaptive cruise control is implemented with cancellation of the engine torque setpoint (CC), the predetermined maximum duration of parallel launching of the setpoints (CC, CF) and exceeding of said at least one maximum threshold being experimentally calculated beforehand as a function of a maximum acceptable heating of the braking system (3) reached during the time counting duration.

2. Method according to the preceding claim, which is implemented for motor vehicle speeds lower than 15 km/h.

3. Method according to the preceding claim, in which the predetermined maximum duration of parallel launching of the setpoints (CC, CF) and exceeding of said at least one maximum threshold is between 25 and 35 seconds.

4. Method according to any one of the preceding claims, in which the maximum acceptable heating is measured according to a power dissipated by the braking system (3) taking into account the motor vehicle speed, a gear ratio implemented in the motor vehicle and the engine torque setpoint (CC).

5. Method according to the preceding claim, in which the maximum acceptable heating corresponds to a dissipated power of 7,200 Watts per wheel of the motor vehicle with an interval of ±20% around this value for a motor vehicle speed of 15 km/h, a first gear ratio and an engine torque setpoint (CC) of 600 Newton-meters.

6. Method according to any one of the preceding claims, in which said at least one maximum threshold is equal to 840 Newton-meters with an interval of ±30% around this value.

7. Motor vehicle comprising a powertrain (2), a braking system (3), an onboard electronic control unit (1) and an adaptive cruise control, the electronic control unit (1) comprising means for establishing an engine torque setpoint (CC) intended for the powertrain (2) and a braking setpoint (CF) intended for the braking system (3), **characterized in that** the electronic control unit (1) implements a method for controlling the adaptive cruise control according to any one of the preceding claims, the electronic control unit (1) comprising a time counter initiated as soon as an engine torque setpoint (CC) and a braking setpoint (CF) are launched in parallel and said at least one maximum threshold of engine torque setpoint (CC) and/or engine torque at the wheel (CR) actually produced is exceeded, means for storing a predetermined maximum duration of parallel launching of the setpoints (CC, CF) and said at least one maximum threshold and means for cancelling the engine torque setpoint (CC) when comparison means determine that a time count is greater than the predetermined maximum duration.

8. Motor vehicle according to the preceding claim, in which the electronic control unit (1) integrates an electronic stability control system of the vehicle, the stability control system comprising a hydraulic unit ensuring transmission of the braking setpoint (CF) to the braking system (3) of the motor vehicle.

9. Motor vehicle according to any one of the two preceding claims, in which the powertrain (2) comprises an engine control unit comprising means for monitoring the engine torque at the wheel (CR) of the motor vehicle actually produced and communicating with the electronic control unit (1).
